# EUROPEAN PATENT APPLICATION

(11) **EP 4 621 602 A1**
(43) Date of publication of application: **24.09.2025**
(21) Application number: 25164985.1
(22) Date of filing: 20.03.2025
(51) Int. Cl.: G06F 16/9532

(54) **SERVICE DETERMINATION METHOD, APPARATUS, MEDIUM, DEVICE, AND PROGRAM PRODUCT**

(30) Priority: 21.03.2024 CN 202410330697
(71) Applicant: Beijing Youzhuju Network Technology Co., Ltd., Beijing 101299 (CN)
(72) Inventor: JIA, Li, Beijing, 100028 (CN)
(74) Representative: Isarpatent

(57) **Abstract**

The present disclosure relates to a service determination method, an apparatus, a medium, a device, and a program product. The method includes: acquiring service description information corresponding to a target service, wherein the service description information includes a service type, key field information, and matching field information of the target service (11); determining, from a service database, a similar service corresponding to the target service based on the service type and the key field information (12); determining a ranking corresponding to the similar service based on the matching field information and service description information corresponding to the similar service (13); and outputting the similar service based on the ranking corresponding to the similar service (14).

## Description

This application claims the priority to and benefits of Chinese Patent Application, No. 2024103306972 filed on March 21, 2024, which is hereby incorporated by reference in its entirety.

### TECHNICAL FIELD

The present disclosure relates to the field of computer technology, and in particular, to a service determination method, an apparatus, a medium, a device, and a program product.

### BACKGROUND

With the development of computer technology, service recommendation provides great convenience in users' daily life. In the related art, users can search for services in a service platform, so as to obtain the required services. For example, when a user wants to make a photography appointment, the user can search layer by layer based on a category in the service platform to select a desired service from a plurality of services. However, each service in the service platform is usually provided by a different service provider. When the user performs direct comparison, the user needs to query a large amount of information to make an accurate evaluation.

### SUMMARY

This Summary is provided to introduce concepts in a simplified form that are described in detail in the following Detailed Description section. This Summary section is neither intended to identify key features or essential features of the claimed technical solution, nor is it intended to be used to limit the scope of the claimed technical solution.

In a first aspect, the present disclosure provides a service determination method, including:
acquiring service description information corresponding to a target service, where the service description information includes a service type, key field information, and matching field information of the target service;
determining, from a service database, a similar service corresponding to the target service, based on the service type and the key field information;
determining a ranking corresponding to the similar service, based on the matching field information and service description information corresponding to the similar service; and
outputting the similar service based on the ranking corresponding to the similar service.

In a second aspect, the present disclosure provides a service determination apparatus, including:
an acquiring module, configured to acquire service description information corresponding to a target service, where the service description information includes a service type, key field information, and matching field information of the target service;
a first determination module, configured to determine, from a service database, a similar service corresponding to the target service based on the service type and the key field information;
a second determination module, configured to determine a ranking corresponding to the similar service based on the matching field information and service description information corresponding to the similar service; and
an outputting module, configured to output the similar service based on the ranking corresponding to the similar service.

In a third aspect, the present disclosure provides a computer-readable medium having a computer program stored thereon, where when the program is executed by a processing apparatus, the method according to the first aspect are implemented.

In a fourth aspect, the present disclosure provides an electronic device, including:
a storage apparatus, having a computer program stored thereon; and
a processing apparatus, configured to execute the computer program in the storage apparatus to implement the method according to the first aspect.

In a fifth aspect, the present disclosure provides a computer program product including a computer program, where when the computer program is executed by a processor, the method according to the first aspect are implemented.

In the above technical solutions, a standardized representation of a service can be implemented through the service description information, so that a service in the service database can be identified based on the service type and the key field information, and the similar service corresponding to the target service can be determined. Further, a relationship between the similar service and the target service can be determined based on the matching field information and the service description information corresponding to the similar service, so as to determine the ranking corresponding to the similar service, and the similar service can be output. Thus, with above technical solutions, implementing the standardized representation of the service based on the service description information allows services provided by different service providers in the service platform to have a unified representation, which is convenient for subsequently accurate and rapid identification of the service. In addition, when identifying similar services, it is also possible to rank each similar service for output, which can not only effectively save operations and time for a user to determine a desired service from the similar services, but also can provide reliable data support for the user to select a service, so that more accurate recommendation can be provided for the user.

Other features and advantages of the present disclosure will be described in detail in the following Detailed Description section.

### BRIEF DESCRIPTION OF DRAWINGS

The above and other features, advantages, and aspects of the embodiments of the present disclosure will become more apparent with reference to the following detailed description and in conjunction with the drawings. Throughout the drawings, the same or similar reference numbers refer to the same or similar elements. It should be understood that the drawings are schematic and that the originals and elements are not necessarily drawn to scale. In the drawings:
Fig. 1 is a flowchart of a service determination method provided according to an embodiment of the present disclosure;
Fig. 2 is a schematic diagram of a service configuration interface provided according to an embodiment of the present disclosure;
Fig. 3 is a schematic diagram of a service information input interface provided according to an embodiment of the present disclosure;
Fig. 4 is a block diagram of a service determination apparatus provided according to an embodiment of the present disclosure; and
Fig. 5 shows a schematic structural diagram of an electronic device suitable for implementing embodiments of the present disclosure.

### DETAILED DESCRIPTION

Embodiments of the present disclosure will be described in more detail below with reference to the drawings. Although some embodiments of the present disclosure are shown in the drawings, it should be understood that the present disclosure can be implemented in various forms and should not be construed as being limited to the embodiments set forth herein. These embodiments are provided for a thorough and complete understanding of the present disclosure. It should be understood that the drawings and embodiments of the present disclosure are only for exemplary purposes, and are not intended to limit the protection scope of the present disclosure.

It should be understood that the various steps described in the implementation modes of the method of the present disclosure may be performed in different orders, and/or performed in parallel. Furthermore, the implementation modes of the method may include additional steps and/or the steps omitted or unshown. The scope of the present disclosure is not limited in this respect.

The term "including" and its variants used herein are open-ended inclusions, that is, "including but not limited to". The term "based on" is "at least partially based on". The term "one embodiment" means "at least one embodiment"; the term "another embodiment" means "at least one other embodiment"; the term "some embodiments" means "at least some embodiments". Relevant definitions of other terms will be given in the description below.

It should be noted that concepts such as "first" and "second" mentioned in the present disclosure are only used to distinguish different apparatuses, modules, or units, and are not intended to limit the order of functions performed by these apparatuses, modules, or units, or interdependence.

It should be noted that the modifiers "one" and "multiple" mentioned in the present disclosure are illustrative rather than restrictive, and those skilled in the art should understand that unless the context clearly indicates otherwise, it should be understood as "one or more".

The names of messages or information exchanged between a plurality of apparatuses in the implementations of the present disclosure are only for illustrative purposes, and are not used to limit the scope of the messages or information.

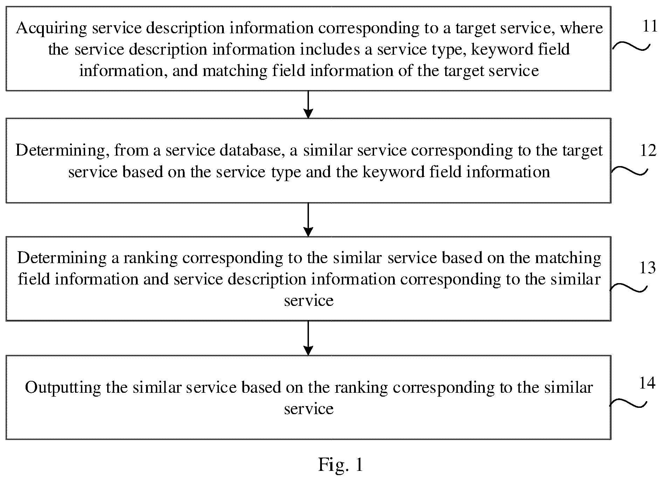

Fig. 1 is a flowchart of a service determination method provided according to an embodiment of the present disclosure. As shown in Fig. 1, the method may include the following steps.

In step 11, service description information corresponding to a target service is acquired, where the service description information includes a service type, key field information, and matching field information of the target service.

The service description information may be generated based on information input when the service is uploaded to the platform, so as to implement a standardized representation of the service. The service description information may include a plurality of fields. As an example, key fields and matching fields corresponding to different services may be set based on actual application scenarios, where the key fields are used for recall identification of the service, and the matching fields are used for ranking the service.

As an example, the target service is a photography service, and the corresponding service type may be "life service/photography/comprehensive portrait photography/individual travel portrait photography"; the key field information may include the amount of clothing sets and the amount of photo frames; and the matching field information may be other field information other than the key field information, or may be a plurality of pre-configured fields, such as the amount of finely repaired photos, the amount of shot photos, a photography scenario, etc.

In step 12, the similar service corresponding to the target service is determined from the service database based on the service type and the key field information.

The definitions of services in different industries usually differ greatly. In the embodiments, when defining and classifying a service, a service type in a different industry may be defined first, so as to determine, among services of the same service type, the similar service corresponding to the target service, to ensure consistency between the similar service and the target service. By identifying the similar service, a plurality of homogenous services may be recommended to the user, so as to provide the user with a plurality of options, and ensure accuracy and effectiveness of service determination. Moreover, when determining the similar service, the similar service can be determined through the key field information, without comparing each field of the service, thereby improving efficiency of service similarity identification.

In step 13, the ranking corresponding to the similar service is determined based on the matching field information and the service description information corresponding to the similar service.

The association degree between each of the determined similar service and the target service is usually different. In this embodiment, each of the similar services may be further matched based on the matching field information, so as to rank the similar services, and therefore preferentially displaying the service with a higher similarity to the target service for the user, without manual judgment and comparison by the user, thereby saving user operations.

In step 14, the similar service is output based on the ranking corresponding to the similar service.

The obtained similar services may be output and displayed to improve service recommendation for the user. As an example, the similar services may be displayed in order of their rankings , and the user may browse the respective similar services by performing an up-and-down sliding operation, so as to obtain a desired service from them.

As another example, similar services that are more similar to the target service are ranked higher. In this example, top N similar services may be selected and displayed according to the ranking. For example, each of the top N similar services is displayed through a service card, and the remaining similar services may be displayed through an aggregate card.

In the above technical solutions, a standardized representation of a service can be implemented through the service description information, so that a service in the service database can be identified based on the service type and the key field information, and the similar service corresponding to the target service can be determined. Further, a relationship between the similar service and the target service can be determined based on the matching field information and the service description information corresponding to the similar service, so as to determine the ranking corresponding to the similar service, and the similar service can be output. Therefore, with above technical solutions, implementing the standardized representation of the service based on the service description information allows services provided by different service providers in the service platform to have a unified representation, which is convenient for subsequent accurate and rapid identification of the service. In addition, when identifying similar services, it is also possible to rank each similar service for output, which can not only effectively save operations and time for a user to determine a desired service from the similar services, but also can provide reliable data support for the user to select a service, so that more accurate recommendation can be provided for the user.

In a possible embodiment, the service description information corresponding to each of the target service and the similar service may be determined in the following way:

A service configuration interface is displayed, where the service configuration interface carries a plurality of candidate service types.

In response to receiving a selection operation for a candidate service type, the candidate service type selected by the selection operation is determined as the service type of the service.

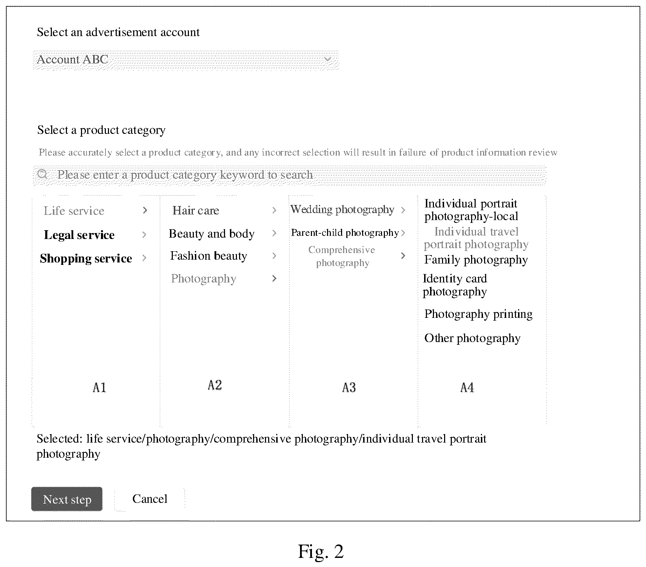

As shown in Fig. 2, the candidate service type may be represented by a multi-level type label. Each service type may be preset or modified in a service platform. When a service provider uploads its service to the service platform, he may first select a service type corresponding to the service. As shown in Fig. 2, which is a service configuration interface, the service provider may select its corresponding service account and service type. When the candidate service types are displayed, the candidate service types may be displayed in a hierarchical manner, that is, in an initial state, respective top-level type labels are displayed, such as labels including "life service", "legal service", "shopping service", etc. as shown in A1. If the service provider selects "life service", the next-level labels as shown in A2 are further displayed. If the service provider further selects the "photography" label, the next-level labels as shown in A3 are further displayed. The bottom-level type label are shown in A4, and when the bottom-level type label is selected, as shown in Fig. 2 as a whole, at this time, the service type currently selected may be prompted, so that it can reconfirm whether the selected service type is accurate.

A service information input interface corresponding to the service type of the service is displayed.

In response to receiving input information in the service information input interface, the service description information corresponding to the service is generated based on the input information and the service type of the service.

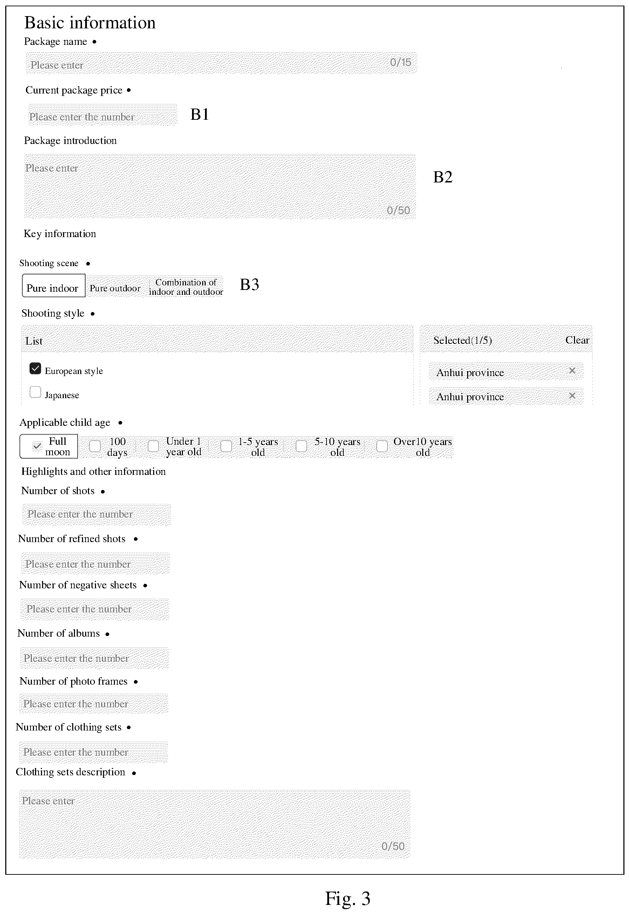

After the service provider selects the service type, the information input interface corresponding to the selected service type may be further displayed, so that the specific information of the service can be further described. As shown in Fig. 3, which is a service information input interface corresponding to the label "individual travel portrait photography". The service provider may input or select information in respective fields; after the service provider submits, the input or selected information may be used as the input information, and field values of respective fields may be determined based on a correspondence between the input information and the respective fields, so as to obtain the service description information.

As shown in Fig. 3, a current service price may be input at a package current price at B1, a package introduction at B2 may be described in a natural language, and a photography scenario at B3 may be selected in which the photography can be performed, so that the user can have a more comprehensive understanding of the service based on the description information.

Therefore, with the above technical solutions, when a corresponding service to the service platform is uploaded, a service type corresponding to the service may be selected first, so that when identifying similar services subsequently, identification can be performed in combination with the service type, thereby improving efficiency of the service identification. In addition, after determining the service type, an information input interface corresponding to the service type is displayed, so that fields required for the service type may be displayed based on differences of the service type under different service types. When the information is input, the matching degree between the input information and the service type is ensured under different service types, and a comprehensive and standardized representation of the service can be implemented based on the input information. In addition, consistency of the input information under the same service type can be ensured, which is convenient for identification of a service under the same service type.

As an example, the target service may be a service that the user searches for. For example, the target service may be a service, among the services after searching, that is clicked by the user.

As another example, the target service may be determined in the following way.

Browsing information of historical services within a historical period of time and a user feature that has been authorized by a user are acquired.

The historical period of time may be set according to an actual application scenario, for example, may be set to a service browsed within the last two hours. As an example, the browsing information may be a user's browsing time period, the number of user's clicks, and the like. The user feature may be used to perform a portrait on a current user so as to characterize the usage preference of the user, and the user feature may be acquired after acquiring the user's authorization.

Based on the browsing information of the historical services and the user feature, a matching degree between the user and the historical service is determined.

As an example, a matching model is pre-trained, the matching model may be implemented based on a neural network and may be trained by using a service used by the user and the user feature as training data, so as to obtain the matching model. In this embodiment, the historical services, the browsing information, and the user feature may be input into the matching model, so as to determine the matching degree between the user and the historical services. The higher the matching degree is, the more the user matches the historical service, that is, the higher the degree of interest of the user in the historical service is.

Based on the matching degree corresponding to the historical services, the target service is determined from the historical service.

As an example, a historical service with the highest matching degree may be determined as the target service, so as to further determine a similar service corresponding to the target service, so that a service that the user is interested in may be further actively recommended to the user without manual search by the user, thereby saving user operations.

As another example, the top M historical services ranked from high to low in the matching degree may be determined as the target services, so as to further expand a range of the target services, ensure accurate representation of the service that the user is interested in by the target services, and provide more data support for subsequent determination of the similar services. Moreover, a similar service recommendation can be actively made to the user based on the user's historical browsing content, thereby further improving the user's usage experience.

In a possible embodiment, an exemplary implementation of determining, from the service database, the similar services corresponding to the target service based on the service type and the key field information may include:
matching the service type of the target service with a service in the service database to determine a candidate service.

The service database may include a plurality of services uploaded by different service providers in the service platform. In an actual application scenario, the difference between services of different service types is usually greater than the difference between services of the same service type. Therefore, in this embodiment, service identification and screening may be performed first based on the service type.

As an example, the service type includes a multi-level type label, and the matching the service type of the target service with the service in the service database to determine the candidate service may include:
determining a detection type corresponding to the target service based on the service type of the target service, where the detection type is initially set as the service type; and
determining a detection service under the detection type in the service database.

Continuing with the above example, in the case that the service type is "life service/photography/comprehensive portrait photography/individual travel portrait photography", the above service type may be used as the detection type at an initial stage, to perform service matching in the service database. In this way, the services under the service type of "life service/photography/comprehensive portrait photography/individual travel portrait photography" in the service database may be determined as the detection services.

As an example, the detection services may be directly determined as the candidate services.

In a possible embodiment, the service type is independently selected by different service providers, and different selection criteria may result in that the similar services are classified into different bottom-level labels. If there are fewer services under the detection type, the detection type may be readjusted for service identification in order to further improve comprehensiveness of service identification and recommendation.

As another example, if the number of the detection service is less than a preset threshold, other level type labels except for a bottom-level type label in the detection type are taken as a new detection type.

The preset threshold may be set based on an actual application scenario, which is not limited in the present disclosure. If the number of the detection service is less than the preset threshold, it means that the number of the determined detection service is relatively little, and a new detection type may be determined. Continuing with the above example, in the case that the bottom-level type label is "individual travel portrait photography", "life service/photography/comprehensive portrait photography" may be taken as the new detection type.

Returning back to the step of determining the detection service under the detection type in the service database, until a sum of the number of detection services under the respective detection types is greater than or equal to the preset threshold, where the candidate services includes the detection services under the respective detection types.

Thereafter, the services under the service type of "life service/photography/comprehensive portrait photography" in the service database may be determined as the detection services, thereby increasing the number of the determined detection services. If the sum of the number of the services under the service type of "life service/photography/comprehensive portrait photography/individual travel portrait photography" and the number of the services under the service type "life service/photography/comprehensive portrait photography" is greater than or equal to the preset threshold, both the services under the service type of "life service/photography/comprehensive portrait photography/individual travel portrait photography" and the services under the service type of "life service/photography/comprehensive portrait photography" are taken as the candidate services.

If the sum of the number of the services under the service type of "life service/photography/comprehensive portrait photography/individual travel portrait photography" and the number of the services under the service type "life service/photography/comprehensive portrait photography" is less than the preset threshold, "life service/photography/" may be further determined as a new detection type, to perform matching from the service database again.

It should be noted that if the sum of the number of detection services under the respective detection types is still less than the preset threshold after the top-level type label is taken as the detection type, the detection services under the respective detection types may be taken as the candidate services.

Therefore, when determining the candidate services, screening may be performed among services of similar service types, so that a range of the candidate service may be increased, and at the same time, an association between the candidate service and the target service may be ensured to a certain extent, thereby avoiding impact of a service type error on identification of a similar service, improving accuracy of the identification of the similar service, and facilitating management and identification of a massive service.

Thereafter, the key field information corresponding to the candidate services is acquired.

Key fields corresponding to different service types may be preset, which may be set according to actual applications. As shown above, the key fields in the key field information may include the amount of clothing sets and the amount of photo frames.

In the case where the key field information corresponding to the candidate service is the same as the key field information corresponding to the target service, the candidate service is determined as the similar service.

For example, if the amount of clothing sets in the key field information of the target service is 4, and the amount of photo frames is 7, a service with 4 sets of clothing and 7 photo frames in the determined candidate service may be determined as the similar service corresponding to the target service.

Therefore, by determining the candidate services using the service type, a plurality of services similar to the target service may be determined, and by further determining the similar services from the candidate service in combination with the key field information, homogenous services of the target service may be determined, thereby ensuring accuracy of identification of the similar services. In addition, based on the similar services, a plurality of homogenous optional services may be provided for the user, so that more possibilities of choices can be provided while recommending the service to the user, thereby ensuring comprehensiveness of the service determination.

In a possible embodiment, an exemplary implementation of determining the ranking corresponding to the similar service based on the matching field information and the service description information corresponding to the similar service may include:
determining a similarity between the target service and the similar service based on the matching field information and the service description information corresponding to the similar service.

Similarly, the matching field in the matching field information may be preset based on an actual application scenario and the service type. In this step, a value of the matching field in the target service (that is, the matching field information) and values of respective matching fields in the similar service may be acquired respectively, and the similarity between the target service and the similar service may be determined by comparing the values of respective matching fields. For example, the number of the matching fields have the same values can be used as the similarity.

As another example, the matching field information includes field values of a plurality of matching fields; and the determining the similarity between the target service and the similar service based on the matching field information and the service description information corresponding to the similar service may include:

for each matching field, determining a similarity between the target service and the similar service under the matching field, based on a field value of the matching field corresponding to the target service and a field value of the matching field in the service description information corresponding to the similar service.

The field values of the target service and the similar service under the matching field may be encoded to determine their corresponding encoding vectors, respectively, and then similarity calculation is performed through the encoding vectors to obtain the similarity under the matching field. The similarity may be a reciprocal of the Euclidean distance or a cosine similarity.

As another example, when the value of the matching field is a numerical value, the similarity may be determined directly by performing a distance calculation and a normalization process based on the field values of the target service and the similar service under the matching field. The normalization process may use a normalization processing algorithm commonly used in the art, which will not be described here redundantly.

Thereafter, performing a weighting process on the similarity under the matching field based on a weight corresponding to each matching field, to obtain the similarity between the target service and the similar service.

The weight corresponding to each matching field may be preset, and in this step, each similarity may be weighted based on the weight, to obtain a comprehensive similarity corresponding to the target service and the similar service.

Therefore, with the above technical solutions, the similarity between the target service and the similar service may be obtained through weighting the similarity of the matching field, so that different weights may be set based on different scenarios during identification of the similar service, thereby ensuring accuracy and adaptability of identification of the similar service in different scenarios, improving applicability of the solutions of the present disclosure to different scenarios, and extending a range of applicability of the service determination method provided in the present disclosure.

After the similarity between each similar service and the target service is determined, the respective similar services may be ranked in an order of the similarity from high to low.

Therefore, the similar service may be ranked based on the similarity, so that a service closer to the target service may be preferentially displayed, and the user can obtain a desired service by browsing fewer services, thereby saving the user's browsing and searching time. In addition, in a scenario of active service recommendation, a user's possibility of clicking on a recommended service is also effectively improved, which is convenient for promotion of the service.

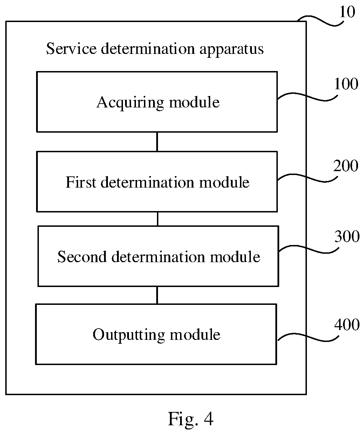

Based on the same inventive concept, the present disclosure further provides a service determination apparatus. As shown in Fig. 4, the apparatus 10 includes:
an acquiring module 100, configured to acquire service description information corresponding to a target service, where the service description information includes a service type, key field information, and matching field information of the target service;
a first determination module 200, configured to determine, from a service database, a similar service corresponding to the target service based on the service type and the key field information;
a second determination module 300, configured to determine a ranking corresponding to the similar service based on the matching field information and service description information corresponding to the similar service; and
an outputting module 400, configured to output the similar service based on the ranking corresponding to the similar service.

Optionally, the service description information corresponding to each of the target service and the similar service is determined by:
displaying a service configuration interface, where the service configuration interface carries a plurality of candidate service types;
in response to receiving a selection operation for a candidate service type, determining the candidate service type selected by the selection operation as the service type of the service;
displaying a service information input interface corresponding to the service type of the service; and
in response to receiving input information in the service information input interface, generating the service description information corresponding to the service based on the input information and the service type of the service.

Optionally, the first determination module includes:
a matching sub-module, configured to match the service type of the target service with a service in the service database to determine a candidate service;
an acquiring sub-module, configured to acquire key field information corresponding to the candidate service; and
a first determination sub-module, configured to determine the candidate service as the similar service, in a case where the key field information corresponding to the candidate service is the same as the key field information corresponding to the target service.

Optionally, the service type includes a multi-level type label, and the matching sub-module includes:
a second determination sub-module, configured to determine a detection type corresponding to the target service based on the service type of the target service, where the detection type is initially set as the service type;
a third determination sub-module, configured to determine a detection service under the detection type in the service database; and
a fourth determination sub-module, configured to, in a case where a number of the detection service is less than a preset threshold, take other level type labels except for a bottom-level type label in the detection type as a new detection type, and re-trigger the third determination sub-module to perform the step of determining the detection service under the detection type in the service database, until a sum of the number of detection services under the respective detection types is greater than or equal to the preset threshold, where the candidate service includes the detection services under the respective detection types.

Optionally, the second determination module includes:
a fifth determination sub-module, configured to determine a similarity between the target service and the similar service based on the matching field information and the service description information corresponding to the similar service; and
a ranking sub-module, configured to rank the respective similar services in an order of the similarity from high to low.

Optionally, the matching field information includes field values of a plurality of matching fields; and the fifth determination sub-module includes:
a sixth determination sub-module, configured to, for each matching field, determine a similarity between the target service and the similar service under the matching field, based on a field value of the matching field corresponding to the target service and a field value of the matching field in the service description information corresponding to the similar service; and
a processing sub-module, configured to perform a weighting process on the similarity under the matching field based on a weight corresponding to each matching field to obtain the similarity between the target service and the similar service.

Optionally, the target service is determined by:
acquiring browsing information of a historical service within a historical period of time and a user feature that has been authorized by a user;
determining a matching degree between the user and the historical service based on the browsing information of the historical service and the user feature; and
determining the target service from the historical service based on the matching degree corresponding to the historical service.

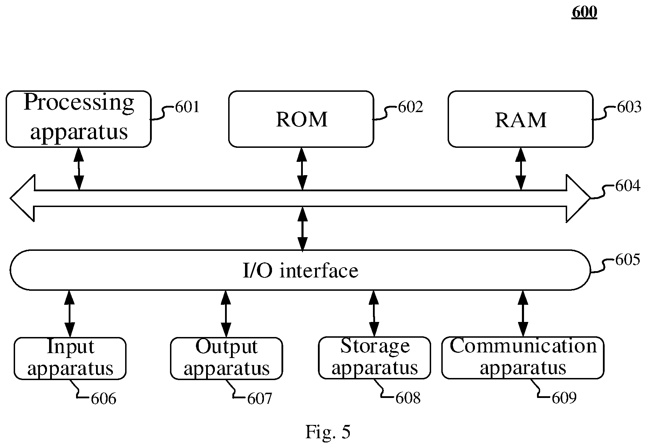

Referring to Fig. 5 below, which shows a schematic structural diagram of an electronic device (such as a terminal device or a server) 600 suitable for implementing the embodiments of the present disclosure. The terminal device in the embodiments of the present disclosure may include, but is not limited to, mobile terminals such as a mobile phone, a notebook computer, a digital broadcast receiver, a PDA (Personal Digital Assistant), a PAD (tablet computer), a PMP (Portable Multimedia Player), a vehicle-mounted terminal (such as a vehicle-mounted navigation terminal), etc., and fixed terminals such as a digital TV, a desktop computer, etc. The electronic device shown in Fig. 5 is only an example, and should not bring any limitation to the functions and scope of use of the embodiments of the present disclosure.

As shown in Fig. 5, the electronic device 600 may include a processing apparatus (such as a central processing unit, a graphics processing unit, etc.) 601. The processing apparatus 601 may perform various appropriate actions and processing according to a program stored in a read-only memory (ROM) 602 or a program loaded from a storage apparatus 608 into a random-access memory (RAM) 603. The RAM 603 further stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touch screen, a touch pad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard disk, etc.; and a communication apparatus 609. The communication apparatus 609 may allow the electronic device 600 to perform wireless or wired communication with other devices to exchange data. Although Fig. 5 shows the electronic device 600 having various apparatuses, it should be understood that it is not required to implement or have all of the illustrated apparatuses. More or fewer apparatuses may alternatively be implemented or provided.

In particular, according to the embodiments of the present disclosure, the processes described above with reference to the flowcharts may be implemented as computer software programs. For example, an embodiment of the present disclosure includes a computer program product, which includes a computer program carried on a non-transitory computer-readable medium. The computer program includes program code for performing the method shown in the flowcharts. In such an embodiment, the computer program may be downloaded and installed from a network through the communication apparatus 609, or installed from the storage apparatus 608, or installed from the ROM 602. When the computer program is executed by the processing apparatus 601, the above-mentioned functions defined in the methods of the embodiments of the present disclosure are implemented.

It should be noted that the above-mentioned computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program that can be used by or in combination with an instruction execution system, apparatus, or device. In the present disclosure, the computer-readable signal medium may include a data signal propagated in a baseband or as a part of a carrier wave, in which a computer-readable program code is carried. This propagated data signal can be in many forms, including but not limited to, an electromagnetic signal, an optical signal, or any suitable combination thereof. The computer-readable signal medium may also be any computer-readable medium other than a computer-readable storage medium. The computer-readable signal medium can send, propagate, or transmit a program for use by or in combination with an instruction execution system, apparatus, or device. The program code contained on the computer-readable medium can be transmitted by any suitable medium, including but not limited to: wire, optical cable, RF (Radio Frequency), etc., or any suitable combination thereof.

In some implementations, a client and a server may communicate with each other by using any currently known or future developed network protocol, such as the HTTP (HyperText Transfer Protocol) protocol, and may be interconnected with any form or medium of digital data communication (for example, a communication network). Examples of communication networks include a local area network ("LAN"), a wide area network ("WAN"), an internet (for example, the Internet), and a peer-to-peer network (for example, an ad hoc peer-to-peer network), as well as any currently known or future developed networks.

The preceding computer-readable medium may be included in the preceding electronic device or may exist alone without being assembled into the electronic device.

The preceding computer-readable medium carries one or more programs, and when the one or more programs are executed by the electronic device, the electronic device is caused to: acquire service description information corresponding to a target service, where the service description information includes a service type, key field information, and matching field information of the target service; determine, from a service database, a similar service corresponding to the target service based on the service type and the key field information; determine a ranking corresponding to the similar service based on the matching field information and service description information corresponding to the similar service; and output the similar service based on the ranking corresponding to the similar service.

Computer program code for performing the operations of the present disclosure may be written in one or more programming languages or a combination thereof. The preceding programming languages include object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or may be connected to an external computer (for example, via the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, which includes one or more executable instructions for implementing specified logical functions. It should also be noted that, in some alternative implementations, the functions noted in the blocks may also occur out of the order noted in the drawings. For example, two blocks shown in succession may, in fact, can be executed substantially in parallel, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may be implemented by a combination of dedicated hardware and computer instructions.

The modules involved in the embodiments of the present disclosure may be implemented in software or hardware. The name of a module does not constitute a limitation on the module itself under certain circumstances. For example, an acquiring module may also be described as "a module for acquiring the service description information corresponding to the target service".

The functions described above herein may be executed, at least partially, by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include, but is not limited to, an electrical, magnetic, optical, electromagnetic, infrared, or semiconductor system, apparatus or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, the present disclosure provides a service determination method, including:
acquiring service description information corresponding to a target service, where the service description information includes a service type, key field information, and matching field information of the target service;
determining, from a service database, a similar service corresponding to the target service based on the service type and the key field information;
determining a ranking corresponding to the similar service based on the matching field information and service description information corresponding to the similar service; and
outputting the similar service based on the ranking corresponding to the similar service.

According to one or more embodiments of the present disclosure, in the above service determination method, the service description information corresponding to each of the target service and the similar service is determined by:
displaying a service configuration interface, where the service configuration interface carries a plurality of candidate service types;
in response to receiving a selection operation for a candidate service type, determining the candidate service type selected by the selection operation as the service type of the service;
displaying a service information input interface corresponding to the service type of the service; and
in response to receiving input information in the service information input interface, generating the service description information corresponding to the service based on the input information and the service type of the service.

According to one or more embodiments of the present disclosure, in the above service determination method, the determining, from the service database, the similar service corresponding to the target service based on the service type and the key field information includes:
matching the service type of the target service with a service in the service database to determine a candidate service;
acquiring key field information corresponding to the candidate service; and
in a case where the key field information corresponding to the candidate service is the same as the key field information corresponding to the target service, determining the candidate service as the similar service.

According to one or more embodiments of the present disclosure, in the above service determination method, the service type includes a multi-level type label, and matching the service type of the target service with the service in the service database to determine the candidate service includes:
determining a detection type corresponding to the target service based on the service type of the target service, where the detection type is the service type initially;
determining a detection service under the detection type in the service database; and
in a case where a number of the detection service is less than a preset threshold, taking other level type labels except for a bottom-level type label in the detection type as a new detection type, and returning to the step of determining the detection service under the detection type in the service database, until a sum of the number of detection services under the respective detection types is greater than or equal to the preset threshold, where the candidate service includes the detection services under the respective detection types.

According to one or more embodiments of the present disclosure, in the above service determination method, the determining the ranking corresponding to the similar service based on the matching field information and the service description information corresponding to the similar service includes:
determining a similarity between the target service and the similar service based on the matching field information and the service description information corresponding to the similar service; and
ranking the respective similar services in an order of the similarity from high to low.

According to one or more embodiments of the present disclosure, in the above service determination method, the matching field information includes field values of a plurality of matching fields; and determining the similarity between the target service and the similar service based on the matching field information and the service description information corresponding to the similar service includes:
for each matching field, determining a similarity between the target service and the similar service under the matching field based on a field value of the matching field corresponding to the target service and a field value of the matching field in the service description information corresponding to the similar service; and
performing a weighting process on the similarity under the matching field based on a weight corresponding to each matching field to obtain the similarity between the target service and the similar service.

According to one or more embodiments of the present disclosure, in the above service determination method, the target service is determined by:
acquiring browsing information of a historical service within a historical period of time and a user feature that has been authorized by a user;
determining a matching degree between the user and the historical service based on the browsing information of the historical service and the user feature; and
determining the target service from the historical service based on the matching degree corresponding to the historical service.

According to one or more embodiments of the present disclosure, the present disclosure further provides a service determination apparatus, including:
an acquiring module, configured to acquire service description information corresponding to a target service, where the service description information includes a service type, key field information, and matching field information of the target service;
a first determination module, configured to determine, from a service database, a similar service corresponding to the target service based on the service type and the key field information;
a second determination module, configured to determine a ranking corresponding to the similar service based on the matching field information and service description information corresponding to the similar service; and
an outputting module, configured to output the similar service based on the ranking corresponding to the similar service.

According to one or more embodiments of the present disclosure, the present disclosure further provides a non-transitory computer-readable medium having a computer program stored thereon, where when the program is executed by a processing apparatus, the above service determination method are implemented.

According to one or more embodiments of the present disclosure, the present disclosure further provides an electronic device, including:
a storage apparatus having a computer program stored thereon; and
a processing apparatus configured to execute the computer program in the storage apparatus, so as to implement the steps of the above service determination.

According to one or more embodiments of the present disclosure, the present disclosure further provides a computer program product including a computer program, where when the computer program is executed by a processor, the above service determination method is implemented.

The above description is only preferred embodiments of the present disclosure and an illustration of the technical principles applied. Those skilled in the art should understand that the scope of disclosure involved in this disclosure is not limited to the technical solutions formed by the specific combination of the above-mentioned technical features, but also covers other technical solutions formed by any combination of the above-mentioned technical features or their equivalent features without departing from the above-mentioned disclosed concept, for example, a technical solution formed by replacing the above-mentioned features with technical features with similar functions disclosed in this disclosure (but not limited to).

In addition, although operations are depicted in a particular order, this should not be understood as requiring that the operations are performed in the specific order shown or performed in a sequential order. Under certain circumstances, multi-task or parallel processing may be advantageous. Similarly, although several specific implementation details are included in the above discussion, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are merely exemplary forms of implementing the claims. With regard to the apparatus in the above-mentioned embodiments, the specific manner in which each module performs an operation has been described in detail in the embodiments relating to the method, and will not be described in detail here.

## Claims

1. A service determination method, comprising:
acquiring service description information corresponding to a target service, wherein the service description information comprises a service type, key field information, and matching field information of the target service (11);
determining, from a service database, a similar service corresponding to the target service based on the service type and the key field information (12);
determining a ranking corresponding to the similar service based on the matching field information and service description information corresponding to the similar service (13); and
outputting the similar service based on the ranking corresponding to the similar service (14).

2. The method according to claim 1, wherein the service description information corresponding to each of the target service and the similar service is determined by:
displaying a service configuration interface, wherein the service configuration interface carries a plurality of candidate service types;
in response to receiving a selection operation for a candidate service type, determining the candidate service type selected by the selection operation as the service type of the service;
displaying a service information input interface corresponding to the service type of the service; and
in response to receiving input information in the service information input interface, generating the service description information corresponding to the service based on the input information and the service type of the service.

3. The method according to claim 1 or 2, wherein the determining, from the service database, the similar service corresponding to the target service based on the service type and the key field information comprises:
matching the service type of the target service with a service in the service database to determine a candidate service;
acquiring key field information corresponding to the candidate service; and
in a case where the key field information corresponding to the candidate service is the same as the key field information corresponding to the target service, determining the candidate service as the similar service.

4. The method according to any one of claims 1-3, wherein the service type comprises a multi-level type label, and the matching the service type of the target service with the service in the service database to determine the candidate service comprises:
determining a detection type corresponding to the target service based on the service type of the target service, wherein the detection type is initially set as the service type;
determining a detection service under the detection type in the service database; and
in a case where a number of the detection service is less than a preset threshold, taking other level type labels except for a bottom-level type label in the detection type as a new detection type, and returning to the step of determining the detection service under the detection type in the service database, until a sum of the number of detection services under the respective detection types is greater than or equal to the preset threshold, wherein the candidate service comprises the detection services under the respective detection types.

5. The method according to any one of claims 1-4, wherein the determining the ranking corresponding to the similar service based on the matching field information and the service description information corresponding to the similar service comprises:
determining a similarity between the target service and the similar service based on the matching field information and the service description information corresponding to the similar service; and
ranking the respective similar services in an order of the similarity from high to low.

6. The method according to claim 5, wherein the matching field information comprises field values of a plurality of matching fields; and the determining the similarity between the target service and the similar service based on the matching field information and the service description information corresponding to the similar service comprises:
for each matching field, determining a similarity between the target service and the similar service under the matching field based on a field value of the matching field corresponding to the target service and a field value of the matching field in the service description information corresponding to the similar service; and
performing a weighting process on the similarity under the matching field based on a weight corresponding to each matching field to obtain the similarity between the target service and the similar service.

7. The method according to any one of claims 1-6, wherein the target service is determined by:
acquiring browsing information of a historical service within a historical period of time and a user feature that has been authorized by a user;
determining a matching degree between the user and the historical service based on the browsing information of the historical service and the user feature; and
determining the target service from the historical service based on the matching degree corresponding to the historical service.

8. A service determination apparatus, comprising:
an acquiring module, configured to acquire service description information corresponding to a target service, wherein the service description information comprises a service type, key field information, and matching field information of the target service;
a first determination module, configured to determine, from a service database, a similar service corresponding to the target service based on the service type and the key field information;
a second determination module, configured to determine a ranking corresponding to the similar service based on the matching field information and service description information corresponding to the similar service; and
an outputting module, configured to output the similar service based on the ranking corresponding to the similar service.

9. The service determination apparatus according to claim 8, wherein the first determination module comprises:
a matching sub-module, configured to match the service type of the target service with a service in the service database to determine a candidate service;
an acquiring sub-module, configured to acquire key field information corresponding to the candidate service; and
a first determination sub-module, configured to determine the candidate service as the similar service, in a case where the key field information corresponding to the candidate service is the same as the key field information corresponding to the target service.

10. The service determination apparatus according to claim 8 or 9, wherein the service type includes a multi-level type label, and the matching sub-module comprises:
a second determination sub-module, configured to determine a detection type corresponding to the target service based on the service type of the target service, where the detection type is initially set as the service type;
a third determination sub-module, configured to determine a detection service under the detection type in the service database; and
a fourth determination sub-module, configured to, in a case where a number of the detection service is less than a preset threshold, take other level type labels except for a bottom-level type label in the detection type as a new detection type, and re-trigger the third determination sub-module to perform the step of determining the detection service under the detection type in the service database, until a sum of the number of detection services under the respective detection types is greater than or equal to the preset threshold, where the candidate service includes the detection services under the respective detection types.

11. The service determination apparatus according to any one of claims 8-10, wherein the second determination module includes:
a fifth determination sub-module, configured to determine a similarity between the target service and the similar service based on the matching field information and the service description information corresponding to the similar service; and
a ranking sub-module, configured to rank the respective similar services in an order of the similarity from high to low.

12. The service determination apparatus according to any one of claims 8-11, wherein the matching field information comprises field values of a plurality of matching fields; and the fifth determination sub-module includes:
a sixth determination sub-module, configured to, for each matching field, determine a similarity between the target service and the similar service under the matching field, based on a field value of the matching field corresponding to the target service and a field value of the matching field in the service description information corresponding to the similar service; and
a processing sub-module, configured to perform a weighting process on the similarity under the matching field based on a weight corresponding to each matching field to obtain the similarity between the target service and the similar service.

13. A non-transitory computer-readable medium having a computer program stored thereon, wherein when the program is executed by a processing apparatus, the method according to any one of claims 1 to 7 are implemented.

14. An electronic device, comprising:
a storage apparatus (608), having a computer program stored thereon; and
a processing apparatus (601), configured to execute the computer program in the storage apparatus (608), so as to implement the method according to any one of claims 1 to 7.

15. A computer program product comprising a computer program, wherein when the computer program is executed by a processor, the method according to any one of claims 1 to 7 are implemented.
